# EUROPEAN PATENT APPLICATION

(11) **EP 4 203 380 A1**
(43) Date of publication of application: **28.06.2023**
(21) Application number: 21857997.7
(22) Date of filing: 13.05.2021
(51) Int. Cl.: H04L 9/08

(54) **ENCRYPTION METHOD, TERMINAL DEVICE, ENCRYPTION SYSTEM, AND PROGRAM**

(30) Priority: 21.08.2020 JP 2020140089
(71) Applicant: Almond Inc., Hamamatsu-shi, Shizuoka, 432-8003 (JP)
(72) Inventor: NIIHARA Shuji, Hamamatsu-shi, Shizuoka 432-8003 (JP)
(74) Representative: v. Bezold & Partner Patentanwälte - PartG mbB
(86) International application number: PCT/JP2021/018302
(87) International publication number: WO 2022/038845

(57) **Abstract**

An encryption method includes acquiring learning data (step S103), generating an encryption key (steps S104, S105), and encrypting (step S106). In the acquiring of the learning data (step S 103), the learning data is acquired from a server device 20 when encryption of target data is requested. In the generating of the encryption key (steps S 104, 105), learning based on the acquired learning data is performed, and the encryption key is generated based on a result of the learning. In the encrypting (step S106), the target data is encrypted using the generated encryption key.

## Description

### Technical Field

The present disclosure relates to an encryption method, a terminal device, an encryption system, and a program.

### Background Art

Technologies for encrypting information are known. For example, Patent Literature 1 describes a key exchange technology in which an encryption key is shared among a plurality of communication devices, wherein the encryption key cannot be acquired even when a long-term private key is leaked.

### Citation List

### Patent Literature

Patent Literature 1: Unexamined Japanese Patent Application Publication No. 2019-125956

### Summary of Invention

### Technical Problem

In encryption technology such as that described above, from the standpoint of security improvement, there is a demand to more reliably prevent leakage of the encryption key. In particular, in methods in which the same encryption key is used for encryption and decryption, there is a greater risk of leakage of the encryption key. As such, achieving both encryption key sharing and leakage prevention is a problem.

In light of such a problem, an objective of the present disclosure is to provide an encryption key whereby both encryption key sharing and leakage prevention can be achieved.

### Solution to Problem

An encryption method according to a first aspect of the present disclosure that achieves the objective described above includes:
acquiring learning data from a server device when encryption of target data is requested;
performing learning based on the acquired learning data and generating, based on a result of the learning, an encryption key; and
encrypting the target data using the generated encryption key.

A terminal device according to a second aspect of the present disclosure that achieves the objective described above is a terminal device capable of communicating with a server device, the terminal device including:
a learning data acquirer that acquires learning data from the server device when encryption of target data is requested;
a key generator that performs learning based on the learning data acquired by the learning data acquirer and generates, based on a result of the learning, an encryption key; and
an encryptor that encrypts the target data using the encryption key generated by the key generator.

An encryption system according to a third aspect of the present disclosure that achieves the objective described above is an encryption system comprising the terminal device and the service device described above,
the server device including
a learning data issuer that issues the learning data to the terminal device when a request for encryption is received from the terminal device.

A program according to a fourth aspect of the present disclosure that achieves the objective described above causes a computer capable of communicating with a server device to function as:
a learning data acquirer that acquires learning data from the server device when encryption of target data is requested;
a key generator that performs learning based on the learning data acquired by the learning data and generates, based on a result of the learning, an encryption key; and
an encryptor that encrypts the target data using the encryption key generated by the key generator.

### Advantageous Effects of Invention

According to the present disclosure, both encryption key sharing and leakage prevention can be achieved.

### Brief Description of Drawings

FIG. 1 is a drawing illustrating a schematic configuration of an encryption system according to Embodiment 1 of the present disclosure;
FIG. 2 is a drawing illustrating the hardware configuration of a terminal device according to Embodiment 1;
FIG. 3 is a drawing illustrating the hardware configuration of a server device according to Embodiment 1;
FIG. 4 is a drawing illustrating the functional configuration of the encryption system according to Embodiment 1;
FIG. 5 is a drawing illustrating learning procedures in Embodiment 1;
FIG. 6 is a drawing illustrating encryption procedures in Embodiment 1;
FIG. 7A is a first drawing illustrating data fingerprint generation procedures in Embodiment 1;
FIG. 7B is a second drawing illustrating the data fingerprint generation procedures in Embodiment 1;
FIG. 7C is a third drawing illustrating the data fingerprint generation procedures in Embodiment 1;
FIG. 8 is a drawing illustrating an example of data stored in a fingerprint DB in Embodiment 1;
FIG. 9 is a sequence drawing illustrating the flow of encryption processing executed in the encryption system according to Embodiment 1;
FIG. 10 is a sequence drawing illustrating the flow of decryption processing executed in the encryption system according to Embodiment 1;
FIG. 11 is a drawing illustrating the functional configuration of an encryption system according to Embodiment 2 of the present disclosure;
FIG. 12 is a sequence drawing illustrating the flow of authentication processing executed in the encryption system according to Embodiment 2;
FIG. 13 is a drawing illustrating an example of data stored in an authentication database in Embodiment 2;
FIG. 14 is a drawing illustrating a situation in which learning data is sent from the server device to the terminal device in Embodiment 3;
FIG. 15 is a drawing illustrating a situation in which target data is split into a plurality of pieces and encrypted in Embodiment 4;
FIG. 16 is a drawing illustrating a situation in which data of a table is encrypted in Embodiment 5; and
FIG. 17 is a drawing illustrating a situation in which data of a table is encrypted in Embodiment 6.

### Description of Embodiments

Hereinafter, embodiments of the present disclosure are described while referencing the drawings. Note that, in the drawings, identical or corresponding components are denoted with the same reference numerals.

### Embodiment 1

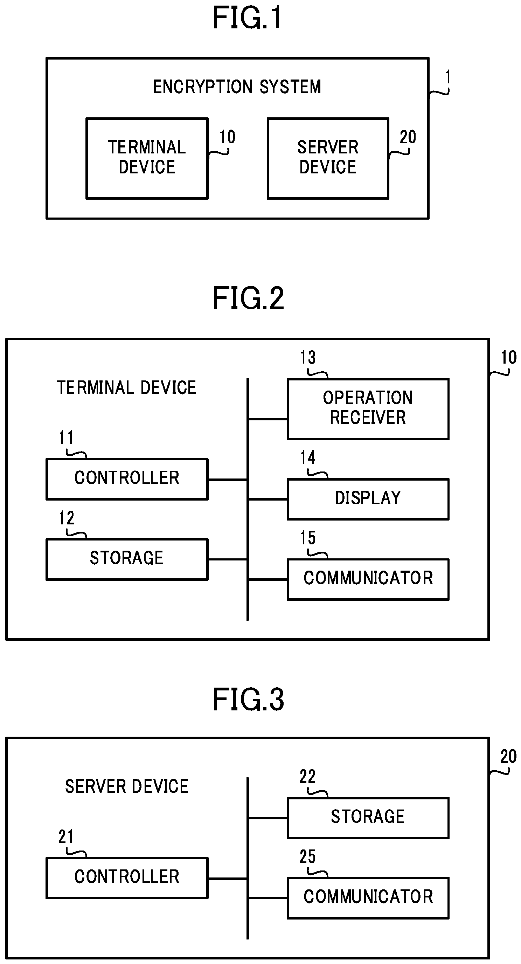

FIG. 1 illustrates an overview of an encryption system 1 according to Embodiment 1. The encryption system 1 is a system that is provided with a function for encrypting digital data so that the content thereof cannot be read by another party, and a function of decrypting the encrypted digital data to the original digital data. The encryption system 1 uses artificial intelligence (AI) to generate a one-time pad encryption key, and encrypts and decrypts the digital data using the generated encryption key. Here, "one-time pad" is a method of using an encryption key in which encryption and decryption are performed by an encryption key generated using a single-use random number sequence. As illustrated in FIG. 1, the encryption system 1 includes a terminal device 10 and a server device 20.

The terminal device 10 is a terminal device such as, for example, a personal computer, a tablet terminal, a smartphone, or the like. The terminal device 10 is a client terminal that is operated by a user. The terminal device 10 is communicably connected to the server device 20 across a broadband network such as the internet. As illustrated in FIG. 2, the terminal device 10 includes a controller 11, a storage 12, an operation receiver 13, a display 14, and a communicator 15.

The controller 11 includes a central processing unit (CPU), a read only memory (ROM), and a random access memory (RAM). The CPU includes a microprocessor or the like and is a central processing unit that executes a variety of processing and computations. In the controller 11, the CPU reads a control program stored in the ROM and controls the operations of the entire terminal device 10 while using the RAM as working memory.

The storage 12 includes nonvolatile memory such as flash memory or a hard disk. The storage 12 has a role as a so-called secondary storage device or auxiliary storage device. The storage 12 stores programs and data used by the controller 11 to perform various processes. Moreover, the storage 12 stores data generated or acquired as a result of the controller 11 performing the various processes.

The operation receiver 13 includes an input device such as a keyboard, a mouse, buttons, a touch pad, and a touch panel, and receives operation inputs from the user.

The display 14 includes a display device such as a liquid crystal display, an organic electro luminescence (EL) display, or the like, and displays various images on the basis of commands from the controller 11.

The communicator 15 includes a communication interface for communicating with external devices of the terminal device 10. In one example, the communicator 15 communicates with external devices including the server device 20 in accordance with a known communication standard such as a local area network (LAN), a universal serial bus (USB), or the like.

Returning to FIG. 1, in one example, the server device 20 is a cloud server, and manages the encryption system 1. In one example, the server device 20 is installed in a facility of a company or the like that manages the encryption system 1. As illustrated in FIG. 3, the server device 20 includes a controller 21, a storage 22, and a communicator 25.

The controller 21 includes a CPU, a ROM, and a RAM. The CPU includes a microprocessor or the like and is a central processing unit that executes a variety of processing and computations. In the controller 21, the CPU reads a control program stored in the ROM and controls the operations of the entire server device 20 while using the RAM as working memory.

The storage 22 includes nonvolatile memory such as flash memory or a hard disk. The storage 22 has a role as a so-called secondary storage device or auxiliary storage device. The storage 22 stores programs and data used by the controller 21 to perform various processes. Moreover, the storage 22 stores data generated or acquired as a result of the controller 21 performing the various processes.

The communicator 25 includes a communication interface for communicating with external devices of the server device 20. In one example, the communicator 25 communicates with external devices including the terminal device 10 in accordance with a known communication standard such as a local area network (LAN), a universal serial bus (USB), or the like.

Note that, in FIG. 1, only one terminal device 10 is illustrated, but the server device 20 is communicably connected across the broadband network to a plurality of terminal devices 10 via the communicator 25. The server device 20 communicates with each terminal device 10 of the plurality of terminal devices 10 via the communicator 25, and manages the encryption of the data in each terminal device 10 of the plurality of terminal devices 10.

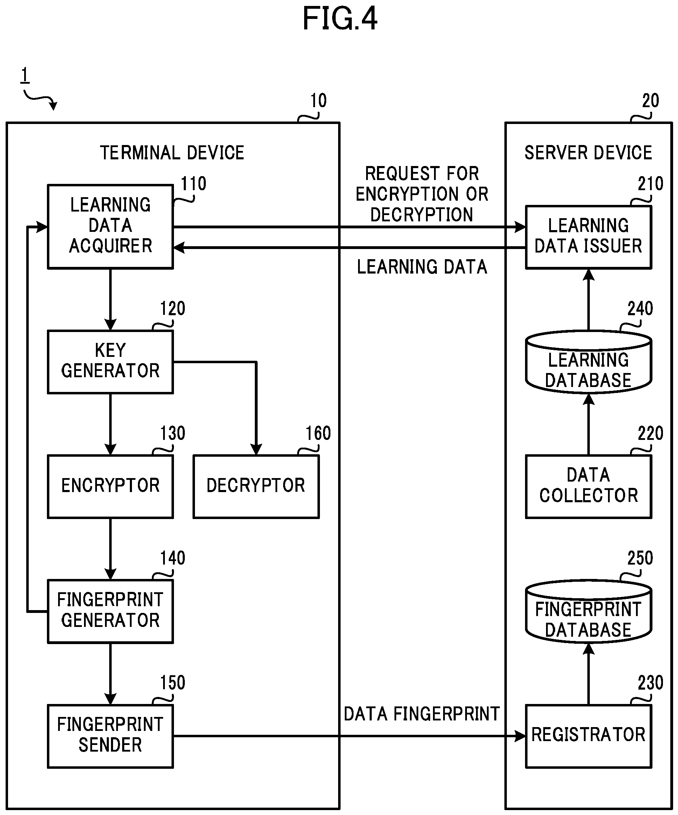

Next, the functional configuration of the encryption system 1 is described while referencing FIG. 4.

As illustrated in FIG. 4, the terminal device 10 functionally includes a learning data acquirer 110, a key generator 120, an encryptor 130, a fingerprint generator 140, a fingerprint sender 150, and a decryptor 160. In the controller 11 of the terminal device 10, the CPU performs control and reads the program stored in the ROM out to the RAM and executes that program, thereby functioning as the various components described above.

The server device 20 functionally includes a learning data issuer 210, a data collector 220, and a registrator 230. In the controller 21 of the server device 20, the CPU performs control and reads the program stored in the ROM out to the RAM and executes that program, thereby functioning as the various components described above.

Additionally, the server device 20 includes a learning database 240, and a fingerprint database 250. These various databases are constructed in appropriate areas in the storage 22.

The encryption system 1 executes: (1) encryption processing for encrypting target data, and (2) decryption processing for decrypting the target data encrypted by the encryption processing. Hereinafter, each of (1) the encryption processing and (2) the decryption processing are described in order.

### (1) Encryption processing

Firstly, the encryption processing for encrypting the target data is described.

When the user of the terminal device 10 desires to encrypt the target data, the user operates the operation receiver 13 to start up a dedicated application/software installed in advance in the terminal device 10. Then, the user logs in to the application/software that is started up, and specifies the target data to be encrypted. Thus, the user requests encryption of the target data.

In the terminal device 10, when encryption of the target data is requested, the learning data acquirer 110 acquires learning data from the server device 20. In this case, the target data is digital data to be encrypted. Examples of the target data include text, images, videos, speech, music, and similar data but, provided that the target data is digital data, any type of data may be used.

The learning data is digital data that serves as the base of an encryption key that encrypts the target data. When encryption of the target data is requested, the learning data acquirer 110 communicates with the server device 20 via the communicator 15 to acquire the learning data from the server device 20, and sends a request for encryption to the server device 20.

In the server device 20, when the request for encryption is received from the terminal device 10, the learning data issuer 210 issues the learning data to the terminal device 10. Specifically, the learning data issuer 210 acquires, from among the data stored in the learning database 240, data of a predetermined data size or greater as the learning data.

The learning database 240 is a database that stores digital data that serves as the base for the encryption key. Specifically, the learning database 240 stores text data (text string data) including various text strings as the digital data that serves as the base of the encryption key. In one example, the learning database 240 stores text data including several thousands of words. Sentence data stored in the learning database 240 is data obtained by accumulating text published on the internet.

The data collector 220 collects digital data published on the internet, and stores the collected digital data in the learning database 240. Specifically, the data collector 220 accesses the internet via the communicator 25, and searches the text data of articles, papers, journals, and the like that are published on various websites, social networking services (SNS), and the like. The data collector 220 collects the text data that is found, and stores the collected text data in the learning database 240. The data collector 220 executes the collecting of text data from the internet on a predetermined frequency, and updates the data stored in the learning database 240. Thus, a variety of data is stored in the learning database 240.

When the request for encryption from the terminal device 10 is received, the learning data issuer 210 issues learning data from among the digital data that is collected by the data collector 220 and stored in the learning database 240. Specifically, the learning data issuer 210 acquires, as the learning data, text data of a predetermined number of bytes or more from among the text data stored in the learning database 240.

More specifically, to enhance security, in the encryption system 1, the encryption key is generated by a one-time pad. As such, the learning data issuer 210 issues, as the learning data, different data every time a request for encryption is received from the terminal device 10. In other words, the learning data issuer 210 does not issue learning data issued in response to one request for encryption as learning data for a different request for encryption.

When continually issuing different learning data every time a request for encryption is received, there is a concern that the learning data will be depleted. However, the data stored in the learning database 240 is added to daily by the data collector 220. Additionally, the data stored in the learning database 240 can be added to by reordering or concatenating portions of the text. Furthermore, since the data stored in the learning database 240 need not have specific linguistic meaning, the data can be created randomly. Thus, the data stored in the learning database 240 can be produced in a substantially unlimited manner and, as such, depletion of the learning data issued by the learning data issuer 210 can be avoided.

When the learning data is acquired from the learning database 240 in this manner, the learning data issuer 210 communicates with the terminal device 10 via the communicator 25 and sends the acquired learning data to the terminal device 10. Specifically, the learning data issuer 210 sends the acquired learning data to the terminal device 10, of the plurality of terminal devices 10 connected to the server device 20, that is the sender of the request for encryption. Thus, the learning data issuer 210 issues the learning data to the terminal device 10 that is the sender of the request for encryption.

In the terminal device 10, the learning data acquirer 110 receives, as a response to the request for encryption, the learning data sent from the server device 20. Thus, the learning data acquirer 110 acquires the learning data.

In the terminal device 10, the key generator 120 performs learning based on the learning data acquired by the learning data acquirer 110. Then, the key generator 120 generates the encryption key on the basis of the results of the learning. Here, the encryption key is information that provides a calculation procedure for encrypting the target data. The key generator 120 generates, as the encryption key, the same shared encryption key when encrypting and decrypting.

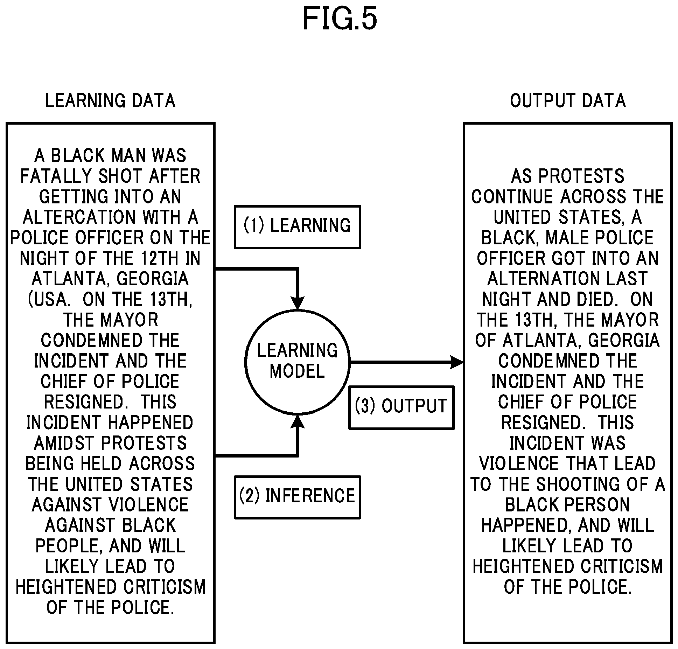

FIG. 5 illustrates learning procedures performed by the key generator 120. Firstly, the key generator 120 learns the learning data acquired by the learning data acquirer 110, and generates a learning model ((1) in FIG. 5). The learning model is a model that receives the input of input data, and outputs output data corresponding to the input data.

Specifically, as the learning, the key generator 120 executes deep learning that uses the learning data acquired by the learning data acquirer 110 as training data (teaching data). Then, the key generator 120 generates a learning model in which a neural network constructed by the deep learning is a constituent element.

More specifically, the key generator 120 uses, as the deep learning, long short-term memory (LSTM), which is a recurrent neural network (RNN) architecture. The key generator 120 uses LSTM to learn the sentences and words included in the text data acquired as the learning data from the server device 20. As a result, the key generator 120 generates a learning model that outputs, as the output data, text corresponding to text input as the input data.

When the learning model is generated, the key generator 120 infers using the generated learning model ((2) in FIG. 5). Specifically, the key generator 120 inputs, as input data, the learning data into the generated learning model. When the input of the learning data is received, the learning model outputs output data corresponding to the learning data ((3) in FIG. 5). The output data is block data that serves as the base of the encryption key.

The learning model outputs, as output data, data of a predetermined number of bytes or more. Specifically, the learning model combines a plurality of words included in the learning data, and outputs, as output data, text data including words of a predetermined word count (for example, 200 words) or greater. As an example, the output data illustrated in FIG. 5 is text data in which sentences included in the learning model input into the learning model as input data are rewritten. The key generator 120 uses the deep learning method to generate such output data from the learning data acquired from the server device 20.

Note that the key generator 120 uses the learning data acquired by the learning data acquirer 110 as the input data. In other words, the key generator 120 uses the same data for the training data (teaching data) at the learning stage and the input data at the inference stage. A reason for this is that the purpose of the learning by the key generator 120 is not to enhance the accuracy of inference, but rather to randomly generate block data that serves as the base of the encryption key. Another way to phrase the reason is that the AI is expected to make mistakes that are difficult to predict. Since accuracy in the output data is not necessary, there is no problem using the same data at the learning stage and the inference stage.

When the learning described above is performed, the key generator 120 generates the encryption key by carrying out a predetermined processing on the output data obtained by the learning. In order to generate the encryption key, the key generator 120 hashes the output data every predetermined unit, and concatenates the hash values. Here, examples of "every predetermined unit" include every predetermined number of bytes, every word, and the like. In the following, an example is described of a case in which the key generator 120 hashes the text included in the output data every word. For example, the key generator 120 uses secure hash algorithm (SHA) 512 as a hash function to calculate a 512 bit hash value for every word of the text included in the output data.

When the hash value is calculated for every word, the key generator 120 concatenates the hash values calculated for every word. As a result, the key generator 120 generates a shared encryption key having a data size that is the same as the data size of the target data to be encrypted.

Thus, the key generator 120 generates, as the encryption key, data obtained by subjecting the output data to hash processing, and does not use the output data of the learning model as-is as the encryption key. As such, the encryption key is more difficult to predict by other parties.

In the terminal device 10, the encryptor 130 uses the encryption key generated by the key generator 120 to encrypt the target data. As a result, the encryptor 130 generates encrypted data that is data in which the target data is encrypted.

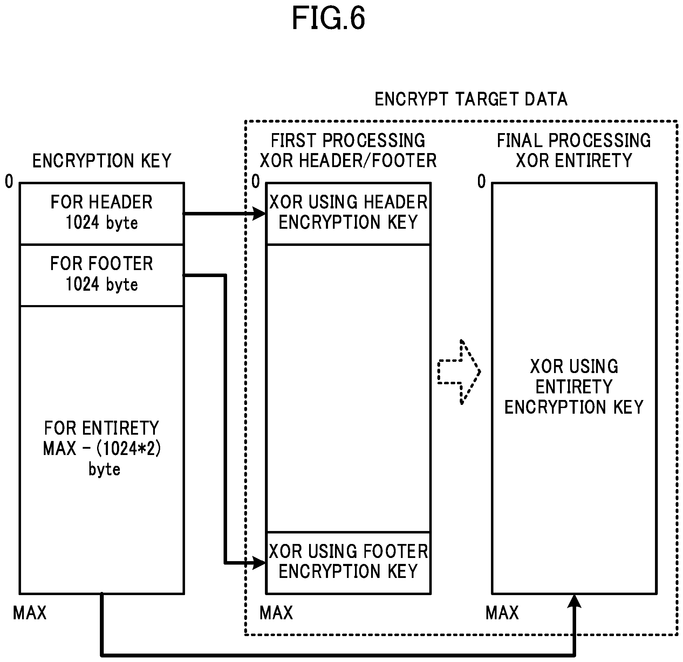

FIG. 6 illustrates encryption procedures. As a first process, the encryptor 130 generates primary data by calculating an exclusive OR (XOR) between a portion of the target data and a portion of the encryption key. Specifically, as illustrated in FIG. 6, in the encryption key generated by the key generator 120, the encryptor 130 defines data of a predetermined number of bytes (in one example, 1024 bytes) from the beginning as for a header, and defines data of the next predetermined number of bytes as for a footer.

The encryptor 130 calculates the XOR, of data at corresponding positions, between the data of the predetermined number of bytes at the beginning of the target data and a header encryption key. Additionally, the encryptor 130 calculates the XOR, of data at corresponding positions, between the data of the predetermined number of bytes at the end of the target data and a footer encryption key. As a result, the encryptor 130 generates primary data in which the header and the footer of the target data are encrypted.

Next, as a final process, the encryptor 130 calculates the XOR, of data at corresponding positions, between an entirety of the primary data generated by the first process and an entirety of the encryption key. As a result, the encryptor 130 generates, as the encrypted data, data obtained by XORing the entirety of the target data at least one time with the encryption key.

Thus, the encryptor 130 generates the primary data by executing the first process on the header and the footer of the target data and, then, calculates the XOR between the entirety of the primary data and the encryption key. As a result, the encryptor 130 can encrypt the target data so as to be more difficult to decode by another party compared to when simply calculating the XOR between the entirety of the target data and the encryption key.

In the terminal device 10, the fingerprint generator 140 generates a data fingerprint by performing a specific computation on the encrypted data that is the target data encrypted by the encryptor 130. Here, the data fingerprint is information used to identify the encrypted data, and is an example of unique information unique to the encrypted data. The fingerprint generator 140 functions as a unique information generator that generates the unique information.

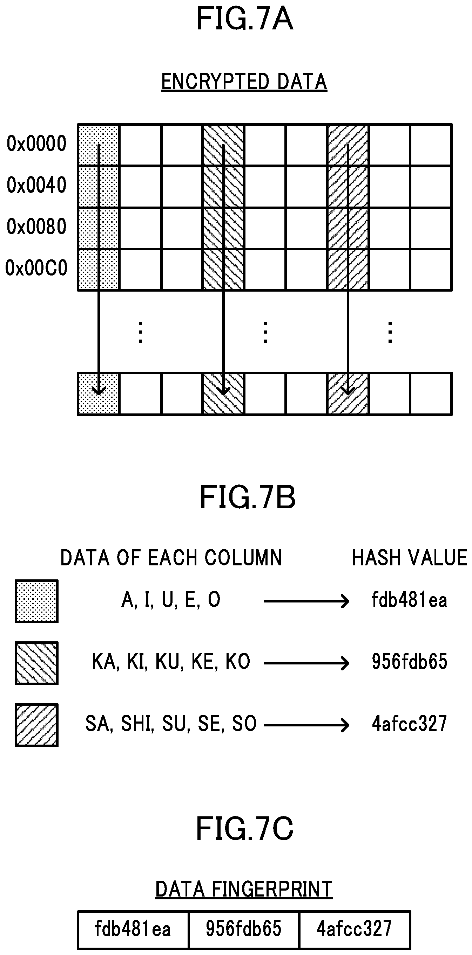

FIGS. 7A to 7C illustrate data fingerprint generation procedures. The fingerprint generator 140 generates the data fingerprint by concatenating portions of the encrypted data, and hashing the concatenated data.

Specifically, as illustrated in FIG. 7A, the fingerprint generator 140 folds back the encrypted data in a row direction every predetermined length (in one example, 65536 bytes), thereby arranging the encrypted data two-dimensionally. Next, as illustrated in FIG. 7B, the fingerprint generator 140 concatenates, in a column direction, the data, of the two-dimensionally arranged encrypted data, at points of predetermined byte intervals (in one example, 2048 byte intervals). As a result, for example, data such as "a, i, u, e, o", "ka, ki, ku, ke, ko", "sa, shi, su, se, so", and the like is obtained.

When the data is concatenated, the fingerprint generator 140 hashes each of the "a, i, u, e, o", the "ka, ki, ku, ke, ko", the "sa, shi, su, se, so", and the like that are the concatenated data, and calculates hash values. Then, the fingerprint generator 140 concatenates the calculated hash values as illustrated in FIG. 7C. The fingerprint generator 140 treats the data generated by concatenating the hash values in this manner as the data fingerprint.

Since the data fingerprint is generated from such procedures, different data fingerprints are generated from different encrypted data. Additionally, since the encryption key itself is generated by a one-time pad, the encryption key is unique and the probability of the same data being generated is quite low. As such, the data fingerprint can be used to identify the encryption key used to generate the encrypted data, and the learning data that served as the base for generating the encryption key. Moreover, the data fingerprint is generated by extracting and concatenating only portions of the encrypted data and then hashing and, as such, does not include information that could lead to decryption of the encrypted data.

In the terminal device 10, the fingerprint sender 150 sends, to the server device 20, the data fingerprint generated by the fingerprint generator 140. Specifically, when the data fingerprint is generated by the fingerprint generator 140, the fingerprint sender 150 communicates with the server device 20 via the communicator 15, and sends the generated data fingerprint to the server device 20. In the server device 20, the registrator 230 receives the data fingerprint sent from the terminal device 10. The fingerprint sender 150 functions as a unique information sender that sends the unique information to the server device 20.

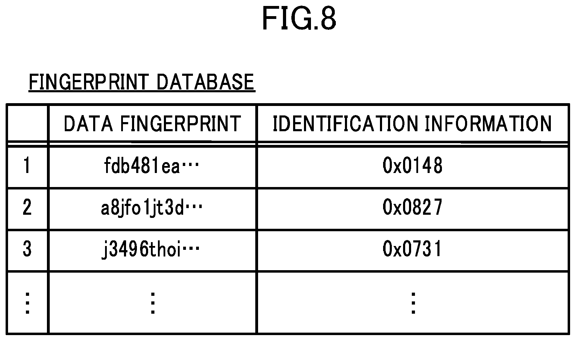

In the server device 20, when the data fingerprint is received from the terminal device 10, the registrator 230 registers the received data fingerprint in the fingerprint database 250. FIG. 8 illustrates an example of data stored in the fingerprint database 250. As illustrated in FIG. 8, the fingerprint database 250 stores each data fingerprint of a plurality of data fingerprints in association with identification information for identifying the learning data.

Each data fingerprint of the plurality of data fingerprints stored in the fingerprint database 250 is unique information generated from the encrypted data that is encrypted using learning data issued in the past by the learning data issuer 210. Additionally, the identification information is information for identifying the piece of data, of the data stored in the learning database 240, that is the learning data used in the encryption of the encrypted data for which the corresponding data fingerprint is generated. In one example, the identification information is information expressing a storage address at which the corresponding learning data is stored in the learning database 240.

When the data fingerprint is received from the terminal device 10, the registrator 230 associates the received data fingerprint with the identification information that identifies the learning data issued by that terminal device 10, and stores the associated information in the fingerprint database 250. As a result, in the decryption processing described below, the learning data issued by the learning data issuer 210 in the past can be identified using the data fingerprint.

Thus, the encryption processing of the target data is ended. The encryption key and the data fingerprint generated in the encryption processing are deleted after the encryption processing to prevent leaking.

### (2) Decryption processing

Next, decryption processing for decrypting the encrypted data generated by the encryption processing to the target data is described.

When the user of the terminal device 10 desires to decrypt the encrypted data encrypted by the encryptor 130, the user operates the operation receiver 13 to start up the dedicated application/software. Then, the user logs in to the application/software that is started up, and specifies the encrypted data to be decrypted. Thus, the user requests decryption of the encrypted data.

In the terminal device 10, when decryption of the encrypted data is requested, the fingerprint generator 140 re-generates the data fingerprint by performing a specific computation on the encrypted data. The generation method of the data fingerprint when decrypting is the same as the generation method of the data fingerprint when encrypting, described above. Specifically, in accordance with the procedures illustrated in FIGS. 7A to 7C, the fingerprint generator 140 concatenates portions of the encrypted data and hashes the concatenated data to generate the data fingerprint.

When the data fingerprint is generated by the fingerprint generator 140, the learning data acquirer 110 re-acquires, from the server device 20, the learning data identified by the data fingerprint, the learning data being the same as that when encrypting. Specifically, the learning data acquirer 110 communicates with the server device 20 via the communicator 15, and sends, to the server device 20, the data fingerprint generated by the fingerprint generator 140 together with the request for decryption.

In the server device 20, when the request for decryption and the data fingerprint are received from the terminal device 10, the learning data issuer 210 re-issues the learning data to the terminal device 10. Specifically, the learning data issuer 210 identifies, from among the plurality of data fingerprints stored in the fingerprint database 250, the data fingerprint that matches the data fingerprint received from the terminal device 10. Then, the learning data issuer 210 uses the identification information stored in association with the data fingerprint identified in the fingerprint database 250 to identify, from among the data stored in the learning database 240, the learning data issued when encrypting.

The learning data issuer 210 acquires the identified learning data from the learning database 240. Then, the learning data issuer 210 sends the learning data acquired from the learning database 240 to the terminal device 10 that is the sender of the request for decryption. As a result, the learning data issuer 210 re-issues the learning data to the terminal device 10. By using the data fingerprint, the learning data issuer 210 can re-issue, from among the data stored in the learning database 240, the same learning data as when encrypting.

In the terminal device 10, the learning data acquirer 110 receives the learning data sent by the learning data issuer 210. As a result, the learning data acquirer 110 re-acquires, from the server device 20, the same learning data as when encrypting.

In the terminal device 10, when decryption of the encrypted data is requested, the key generator 120 re-performs the learning based on the learning data acquired by the learning data acquirer 110. Then, the key generator 120 re-generates the encryption key by performing the predetermined processing on the output data obtained by the learning.

When decrypting, the key generator 120 generates an encryption key in accordance with the procedures illustrated in FIG. 5, the same as when encrypting. Specifically, in accordance with the procedures illustrated in FIG. 5, the controller 11 uses the deep learning method to learn the learning data, and generates a learning model. Then, the controller 11 inputs, as input data, the learning data acquired from the server device 20, and obtains output data corresponding thereto.

When the output data is obtained, the controller 11 hashes the text included in the output data for every word and concatenates the hash values to generate the encryption key. The encryption key generated in this manner when decrypting is generated from the same learning data used when encrypting and, as such, is the same as the encryption key generated when encrypting.

In the terminal device 10, when decryption of the encrypted data is requested, the decryptor 160 uses the encryption key generated by the key generator 120 to decrypt the encrypted data to the target data. The decryptor 160 decrypts the encrypted data by performing the encryption procedures illustrated in FIG. 6 in reverse.

Specifically, the decryptor 160 restores the primary data by calculating the XOR, of data at corresponding positions, between the entirety of the encrypted data and the entirety of the encryption key. Next, the decryptor 160 calculates the XOR between the data of the predetermined number of bytes from the beginning of the primary data and the header encryption key, and calculates the XOR between the data of the predetermined number of bytes from the end of the primary data and the footer encryption key. As a result, the original target data is restored from the encrypted data.

Thus, the decryption processing of the encrypted data is ended. The encryption key and the data fingerprint generated in the decryption processing are deleted after the decryption processing to prevent leaking.

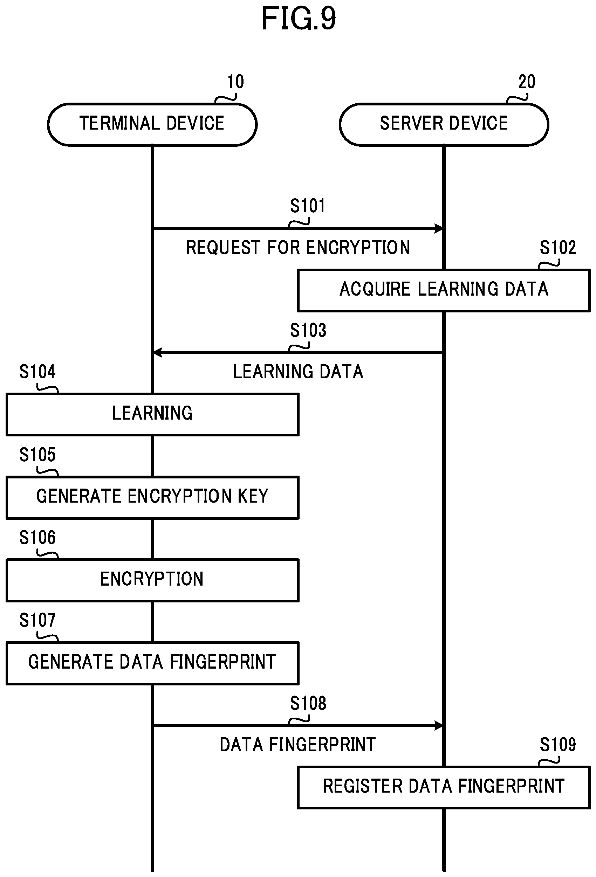

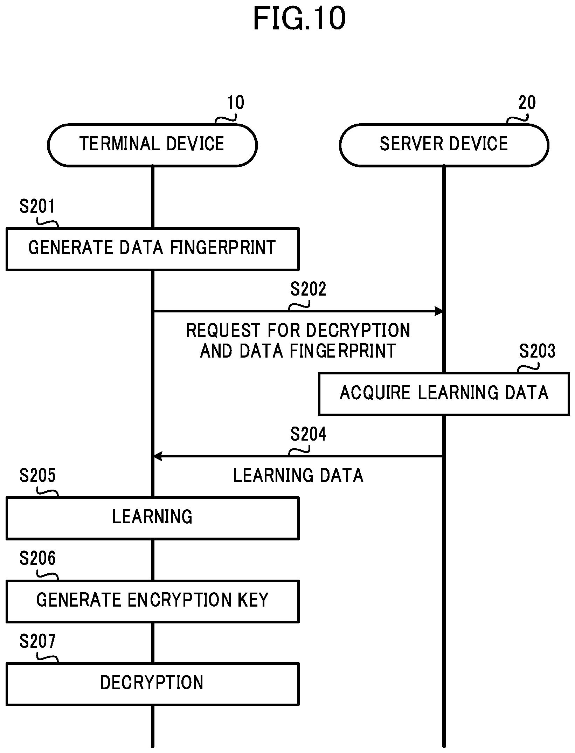

The flows of the encryption processing and the decryption processing executed in the encryption system 1 configured as described above are respectively described while referencing the sequence drawings illustrated in FIGS. 9 and 10.

The encryption processing illustrated in FIG. 9 is started in response to the user of the terminal device 10 starting up and logging in to the dedicated application/software, and specifying the target data to be encrypted.

When the encryption processing is started, in the terminal device 10, the controller 11 sends a request for encryption to the server device 20 (step S101). In the server device 20, the controller 21 receives the request for encryption sent from the terminal device 10.

When the request for encryption is received, the controller 21 acquires the learning data from the learning database 240 (step S102). Specifically, the controller 21 acquires text data of a predetermined number of bytes or more from among the data stored in the learning database 240.

When the learning data is acquired, the controller 21 sends the acquired learning data to the terminal device 10 that is the sender of the request for encryption (step S103). Thus, the controller 21 issues the learning data to the terminal device 10. In the terminal device 10, the controller 11 receives the learning data sent from the server device 20, thereby acquiring the learning data. Step S103 is an example of the step of issuing the learning data and a step of acquiring the learning data.

When the learning data is acquired, the controller 11 performs learning based on the acquired learning data (step S104). Specifically, in accordance with the procedures illustrated in FIG. 5, the controller 11 uses the deep learning method to learn the learning data, and generates the learning model. Then, the controller 11 inputs, as input data, the learning data acquired from the server device 20, and obtains output data corresponding thereto.

When the learning is performed, the controller 11 generates the encryption key on the basis of the output data obtained by the learning (step S105). Specifically, the controller 11 hashes the text included in the output data for every word, and concatenates the hash values to generate the encryption key. Steps S104 and S105 are examples of the step of generating a key.

When the encryption key is generated, the controller 11 uses the generated encryption key to encrypt the target data (step S 106). Specifically, in accordance with the procedures illustrated in FIG. 6, the controller 11 executes the first process on the beginning and the end of the target data and, then, calculates the XOR between the entirety of the target data and the encryption key. Step S106 is an example of the step of encrypting.

When the target data is encrypted and the encrypted data is generated, the controller 11 generates a data fingerprint from the encrypted data (step S 107). Specifically, in accordance with the procedures illustrated in FIGS. 7A to 7C, the controller 11 concatenates portions of the encrypted data and hashes the concatenated data to generate the data fingerprint. Step S107 is an example of the step of generating unique information.

When the data fingerprint is generated, the controller 11 sends the generated data fingerprint to the server device 20 (step S108). In the server device 20, the controller 21 receives the data fingerprint sent from the terminal device 10. Step S 107 is an example of the step of sending the unique information.

When the data fingerprint is received, the controller 21 registers the received data fingerprint (step S109). Specifically, the controller 21 associates the data fingerprint received from the terminal device 10 with identification information for identifying the learning data sent from that terminal device 10 in step S103, and registers the associated information in the fingerprint database 250. Step S109 is an example of the step of registering. Thus, the encryption processing illustrated in FIG. 9 is ended.

Next the decryption processing is described while referencing FIG. 10. The decryption processing illustrated in FIG. 10 is started in response to the user of the terminal device 10 starting up and logging in to the dedicated application/software, and specifying the encrypted data generated by the encryption processing as the data to be decrypted.

When the decryption processing is started, in the terminal device 10, the controller 11 generates a data fingerprint from the encrypted data (step S201). Specifically, the controller 11 generates a data fingerprint in accordance with the procedures illustrated in FIGS. 7A to 7C, the same as in step S107 of the encryption processing. Step S201 is an example of the step of re-generating the unique information.

When the data fingerprint is generated, the controller 11 sends, to the server device 20, the generated data fingerprint together with a request for decryption (step S202). In the server device 20, the controller 21 receives the data fingerprint and the request for decryption sent from the terminal device 10.

When the data fingerprint is received, the controller 21 acquires, from the learning database 240, the learning data identified by the received data fingerprint (step S203). Specifically, the controller 21 identifies, in the fingerprint database 250, the data fingerprint that matches the data fingerprint received from the terminal device 10. Then, the controller 21 acquires, from the learning database 240 and on the basis of the identification information stored in association with the identified data fingerprint, the same learning data as the learning data issued in step S 102 of the encryption processing.

When the learning data is acquired, the controller 21 sends the acquired learning data to the terminal device 10 that is the sender of the data fingerprint and the request for decryption (step S204). In the terminal device 10, the controller 11 receives the learning data sent from the server device 20. As a result, the controller 11 re-acquires the same learning data as when encrypting. Step S204 is an example of the step of re-issuing the learning data and the step of re-acquiring the learning data.

When the learning data is acquired, the controller 11 performs learning based on the obtained learning data, the same as in step S 104 of the encryption processing (step S205). Then, the controller 11 generates an encryption key on the basis of the output data obtained by the learning, the same as in step S 105 of the encryption processing (step S206). Steps S205 and S206 are examples of the step of re-generating the key.

When the encryption key is generated, in accordance with the procedures illustrated in FIG. 6 in reverse order, the controller 11 uses the generated encryption key to decrypt the encrypted data (step S207). As a result, the target data prior to being encrypted by the encryptor 130 is restored. Step S207 is an example of the step of decrypting. Thus, the decryption processing illustrated in FIG. 10 is ended.

As described above, in the encryption system 1 according to Embodiment 1, the terminal device 10 performs the learning based on the learning data acquired from the server device 20, generates the encryption key on the basis of the results of the learning, and uses the generated encryption key to encrypt the target data. Since the encryption key is generated by the learning based on the learning data acquired from the server device 20, the encryption key itself is not distributed in the communications. Additionally, even if the learning data was leaked, it is difficult to generate the encryption key from the learning data. Therefore, in an encryption method in which the same encryption key is used for encryption and decryption, the encryption system 1 according to Embodiment 1 can prevent leakage of the encryption key with high precision. That is, the problem of encryption key sharing and leakage prevention being contradictory to each other is resolved, and both encryption key sharing and leakage prevention can be achieved.

In particular, the server device 20 issues different learning data every time a request for encryption is received, and the terminal device 10 generates the encryption key by a one-time pad on the basis of the learning data that is different for every request for encryption. As a result, leakage of the encryption key can be more reliably prevented.

The functions of the encryption system 1 according to Embodiment 1 can be utilized from any type of terminal, provided that the terminal can communicate with the server device 20, that is, can connect to an existing internet environment. As such, the user can easily use the encryption system 1 to encrypt and decrypt digital data.

The encryption system 1 according to Embodiment 1 generates the data fingerprint from the encrypted target data, and registers the data fingerprint in the fingerprint database 250. Moreover, when decryption of the encrypted target data is requested, the encryption system 1 acquires, from the server device 20, the learning data identified by the data fingerprint, and generates, on the basis of the acquired learning data, an encryption key that is the same as when encrypting the target data. The need for the user to manage the encryption key is eliminated and, as such, convenience is improved. Additionally, since the data fingerprint is obtained by hashing portions of the encrypted data, no information that could lead to decryption is leaked, even if the data fingerprint is leaked. Thus, the user can easily use the encryption system 1 to encrypt the target data.

### Embodiment 2

Next, Embodiment 2 of the present disclosure is described. In Embodiment 2, as appropriate, descriptions of configurations and functions that are the same as described in Embodiment 1 are forgone.

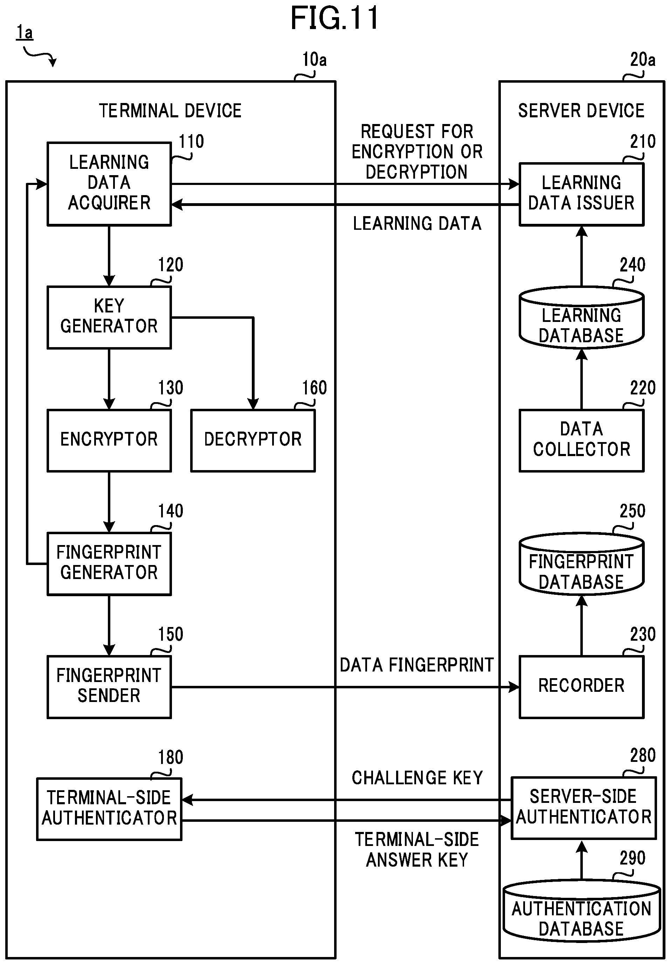

FIG. 11 is a drawing illustrating the functional configuration of an encryption system 1a according to Embodiment 2. A terminal device 10a includes a terminal-side authenticator 180 in addition to the functions of Embodiment 1 illustrated in FIG. 4. In the control unit 11, the CPU performs control and reads the program stored in the ROM out to the RAM and executes that program, thereby functioning as the terminal-side authenticator 180.

A server device 20a includes a server-side authenticator 280 and an authentication database 290 in addition to the functions of Embodiment 1 illustrated in FIG. 4. In the control unit 21, the CPU performs control and reads the program stored in the ROM out to the RAM and executes that program, thereby functioning as the server-side authenticator 280. The authentication database 290 is constructed in an appropriate area in the storage 22.

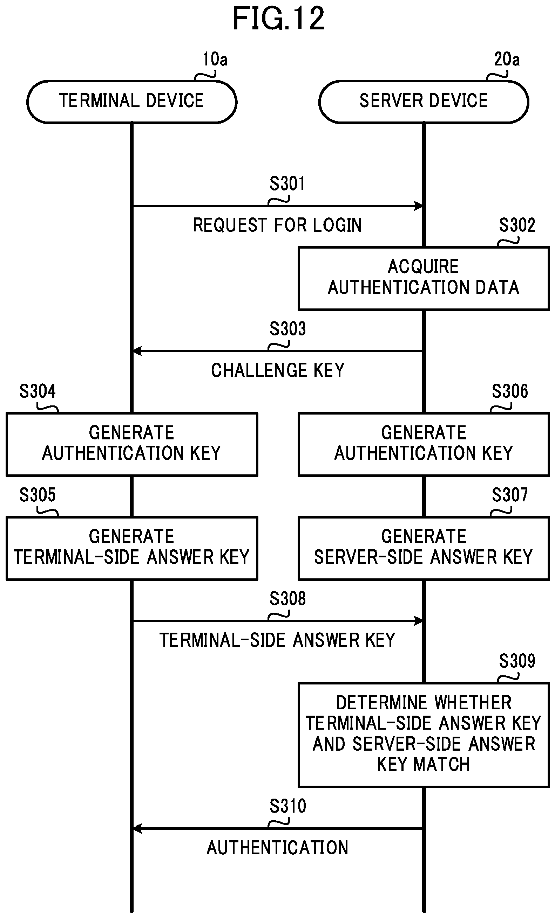

When a login is requested by the user, the terminal-side authenticator 180 of the terminal device 10a and the server-side authenticator 280 of the server device 20a cooperate with each other to execute authentication processing of the login. In the following, the authentication processing executed by the terminal-side authenticator 180 and the server-side authenticator 280 is described while referencing FIG. 12.

When a user that has used the encryption system 1a in the past uses the encryption system 1a for a second time or later, the authentication processing illustrated in FIG. 12 is executed as preprocessing of the encryption processing illustrated in FIG. 9 and the decryption processing illustrated in FIG. 10. In contrast, when a user uses the encryption system 1a for the first time, the authentication processing illustrated in FIG. 12 is not executed. When the user uses the encryption system 1a for the second time or later, the user starts up the application/software, and inputs account information of the user to request a login. Thus, the authentication processing illustrated in FIG. 12 is started.

When the authentication processing is started, in the terminal device 10a, the terminal-side authenticator 180 sends a request for login to the server device 20a (step S301). The request for login includes the account information of the user requesting the login. In the server device 20a, the server-side authenticator 280 receives the request for login sent from the terminal device 10a.

In the server device 20a, when the request for login is received, the server-side authenticator 280 acquires authentication data from the authentication database 290 (step S302). Here, the "authentication data" is data generated from the learning data issued when the user used the encryption system 1a up to the previous time, and is data that serves as the base of an authentication key. The authentication data is generated by hashing the learning data of the past N times (where N is a predetermined natural number) issued to the same user by the learning data issuer 210, and concatenating the hash values.

More specifically, the authentication data is respectively generated in the terminal device 10a and the server device 20a. In the terminal device 10a, the learning data acquirer 110 generate the authentication data by acquiring the learning data and, then, hashing the acquired learning data of the past N times, which includes that learning data, and concatenating the hash values. In the server device 20a, the learning data issuer 210 generates the authentication data by issuing the learning data and, then, hashing the issued learning data of the past N times, which includes that learning data, and concatenating the hash values.

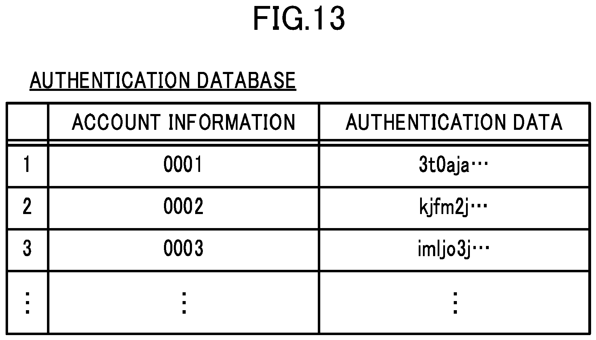

As illustrated in FIG. 13, the authentication database 290 stores the account information of each user that has used the encryption system 1a in the past in association with the authentication data generated from the learning data issued to each user. The server-side authenticator 280 acquires, from the authentication database 290, the authentication data stored in association with the account information included in the request for login received from the terminal device 10a.

When the authentication data is acquired, the server-side authenticator 280 randomly generates a challenge key, and sends the generated challenge key to the terminal device 10a that is the sender of the request for login (step S303). As a result, the server-side authenticator 280 issues the challenge key to the terminal device 10a. The challenge key is information used to authenticate the login. In the terminal device 10a, the terminal-side authenticator 180 receives the challenge key sent from the server device 20a. As a result, the terminal-side authenticator 180 acquires the challenge key.

When the challenge key is acquired, the terminal-side authenticator 180 generates an authentication key from the authentication data generated in the terminal device 10a (step S304). Specifically, the terminal-side authenticator 180 performs learning based on the authentication data, the same as the encryption key generation procedures performed by the key generator 120. Then, the terminal-side authenticator 180 generates the authentication key by performing a predetermined processing on the output data obtained by the learning.

When the authentication key is generated, the terminal-side authenticator 180 generates a terminal-side answer key by using the generated authentication key to decrypt the challenge key received from the server device 20a (step S305). Specifically, the terminal-side authenticator 180 generate the terminal-side answer key by calculating the XOR between the authentication key and the challenge key.

Meanwhile, in the server device 20a as well, the server-side authenticator 280 generates an authentication key from the authentication data generated in the server device 20a. (step S306). Then, the server-side authenticator 280 generates a server-side answer key by using the generated authentication key to decode the challenge key (step S307). The generation procedures and the decryption procedures of the authentication key in the server device 20a are the same as the generation procedures and the decryption procedures of the authentication key in the terminal device 10a.

In the terminal device 10a, when the terminal-side answer key is generated, the terminal-side authenticator 180 sends the generated terminal-side answer key to the server device 20a (step S308). In the server device 20a, the server-side authenticator 280 receives the terminal-side answer key sent from the terminal device 10a.

When the terminal-side answer key is received, the server-side authenticator 280 determines whether the terminal-side answer key and the server-side answer key match (step S309). As a result, the server-side authenticator 280 confirms whether the terminal-side answer key and the server-side answer key are generated by decrypting the challenge key using authentication keys generated from the same learning data and the same authentication data.

When the terminal-side answer key and the server-side answer key match, the server-side authenticator 280 authenticates the login (step S310). In such a case, the server-side authenticator 280 sends, to the terminal device 10a, authentication information expressing that the authentication of the login has succeeded. Thereafter, the processing of the encryption system 1a transitions to the encryption processing illustrated in FIG. 9 or the decryption processing illustrated in FIG. 10.

In contrast, when the terminal-side answer key and the server-side answer key do not match in step S309, the server-side authenticator 280 sends, to the terminal device 10a, information expressing that the login has failed. In such a case, the encryption processing illustrated in FIG. 9 or the decryption processing illustrated in FIG. 10 is not executed.

Thus, the authentication processing illustrated in FIG. 12 is ended. In the authentication processing illustrated in FIG. 12, the steps executed by the terminal device 10a are examples of the step of terminal-side authenticating, and the steps executed by the server device 20a are examples of the step of server-side authenticating.

Thus, in the encryption system 1a according to Embodiment 2, when a login is requested from the terminal device 10a, the server-side authenticator 280 issues a challenge key to the terminal device 10a and, when the terminal-side answer key generated from the challenge key in the terminal device 10a and the server-side answer key generated from the challenge key in the server device 20a match, the server-side authenticator 280 authenticates the login. The encryption processing and the decryption processing are only executed when the authentication of the login has succeeded is and, as such, security can be enhanced.

In particular, the encryption system 1a according to Embodiment 2 performs the learning based on the authentication data generated from the past learning data, and uses the authentication key obtained by the learning to authenticate the login. As a result, it is possible to more reliably confirm whether the user is appropriate.

### Embodiment 3

Next, Embodiment 3 of the present disclosure is described. In Embodiment 3, as appropriate, descriptions of configurations and functions that are the same as described in Embodiments 1 and 2 are forgone.

In Embodiment 1, the server device 20 combines the learning data into one piece of data and sends the data to the terminal device 10 when issuing the learning data to the terminal device 10. In contrast, in Embodiment 3, when issuing the learning data to the terminal device 10, the server device 20 divides the learning data into a plurality of pieces of partial learning data and sends the plurality of pieces of partial learning data to the terminal device 10.

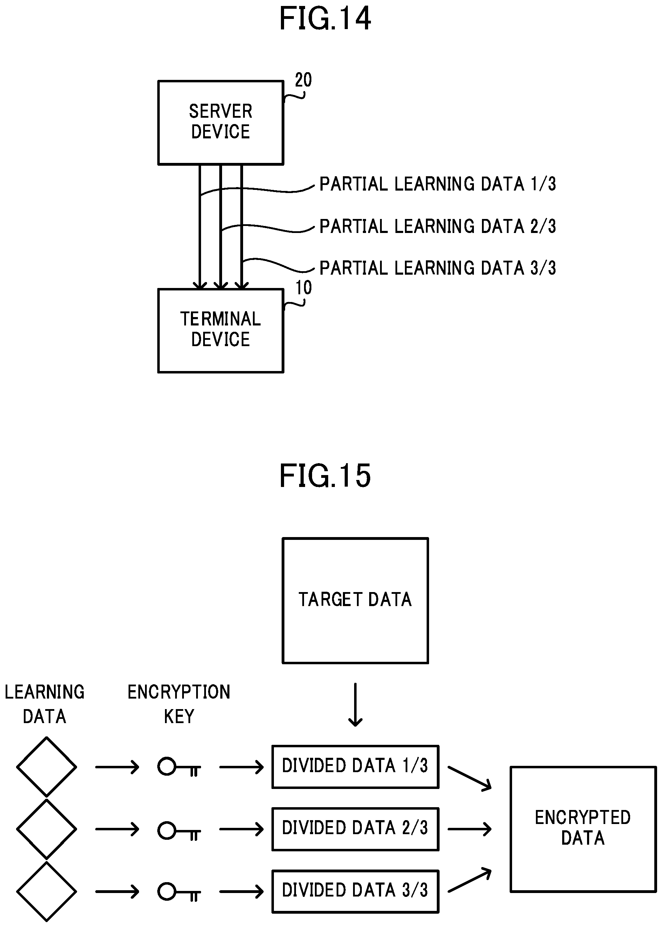

FIG. 14 illustrates a situation in which learning data is sent from the server device 20 to the terminal device 10 in Embodiment 3. In Embodiment 3, in the server device 20, when issuing the learning data in the step of issuing the learning data, the learning data issuer 210 sends the plurality of pieces of partial learning data individually to the terminal device 10. In the example of FIG. 14, the learning data issuer 210 divides the learning data into three pieces of partial learning data 1/3, 2/3, 3/3, and sends these pieces to the terminal device 10.

Specifically, when a request for encryption is received from the terminal device 10, the learning data issuer 210 acquires, as the learning data, text data of a predetermined number of bytes or more from among the text data stored in the learning database 240. Then, the learning data issuer 210 divides the learning data acquired from the learning database 240 into a plurality of pieces of partial learning data.

When the learning data is divided into the plurality of pieces of partial learning data in this manner, the learning data issuer 210 communicates with the terminal device 10 via the communicator 25 and sends the plurality of pieces of partial learning data to the terminal device 10. Specifically, the learning data issuer 210 adds information, such as header information and the like needed for communicating, to each of the plurality of pieces of partial learning data. Then, the learning data issuer 210 sends the plurality of pieces of partial learning data individually to the terminal device 10 that is the sender of the request for encryption among the plurality of terminal devices 10 connected to the server device 20.

In the terminal device 10, the learning data acquirer 110 receives the plurality of pieces of partial learning data sent from the server device 20. Then, the learning data acquirer 110 concatenates the received plurality of pieces of partial learning data. As a result, the learning data acquirer 110 restores the learning data acquired from the learning database 240 in the server device 20 Thus, the learning data acquirer 110 acquires the learning data in the step of acquiring the learning data.

When the learning data acquirer 110 acquires the learning data, the key generator 120 performs learning based on the acquired learning data, and generates an encryption key on the basis of the results of the learning. The encryptor 130 uses the encryption key generated by the key generator 120 to encrypt the target data. The functions of the key generator 120 and the encryptor 130 are the same as described in Embodiment 1.

The steps carried out in the decryption processing are similar to those carried out in the encryption processing. Specifically, when re-issuing the learning data to the terminal device 10, the learning data issuer 210 sends the plurality of pieces of partial learning data individually to the terminal device 10. The learning data acquirer 110 receives the plurality of pieces of partial learning data sent individually from the server device 20 and concatenates the received plurality of pieces of partial learning data to re-acquire the learning data.

Thus, in Embodiment 3, when issuing the learning data to the terminal device 10, the learning data issuer 210 sends, as the learning data, the plurality of pieces of partial learning data individually to the terminal device 10. Moreover, the learning data acquirer 110 receives the plurality of pieces of partial learning data sent individually from the server device 20 and concatenates the received plurality of pieces of partial learning data to acquire the learning data. The communication is encrypted and, as such, safety with regards to wiretapping and the like can be ensured when sending one combined piece of learning data, but the safety of the communication can be further enhanced by dividing the communication. In particular, when different encryption is performed for every communication, decryption becomes more difficult. Note that the number of communications increases due to the communication being divided and, as such, the number of headers added for every packet increases an amount corresponding to the number of communications. This leads to an increase in the amount of communication, but since the communication speed is enhanced, any lag that occurs is imperceivable.

Note that, when acquiring the plurality of pieces of partial learning data, the learning data issuer 210 is not limited to dividing the one piece of learning data acquired from the learning database 240, but may directly acquire the plurality of pieces of partial learning data from the learning database 240. In such a case, the learning data issuer 210 acquires the plurality of pieces of partial learning data from the learning database 240 such that a sum value of the data size of the plurality of pieces of partial learning data matches the data size of the learning data to be issued.

The learning data issuer 210 may divide not only the learning data, but also other data to be sent between the server device 20 and the terminal device 10 into a plurality of pieces and send the data. Example of such data include the data fingerprint, the challenge key, the answer key, and the like. Additionally, when sending the plurality of pieces of partial learning data, the learning data issuer 210 may change the order of sending of the plurality of pieces of partial learning data in order to further enhance the safety of the communication. For example, the learning data issuer 210 may randomly change the order of the sending.

### Embodiment 4

Next, Embodiment 4 of the present disclosure is described. In Embodiment 4, as appropriate, descriptions of configurations and functions that are the same as described in Embodiments 1 to 3 are forgone.

In Embodiment 1, one piece of learning data is user to encrypt one piece of target data. In contrast, in Embodiment 3, a plurality of pieces of learning data is used to encrypt one piece of target data.

FIG. 15 illustrates the encryption procedures in Embodiment 4. In Embodiment 4, in the server device 20, when a request for encryption is received from the terminal device 10, the learning data issuer 210 issues a plurality of mutually different pieces of learning data to the terminal device 10. In the example of FIG. 15, the learning data issuer 210 issues three mutually different pieces of learning data for the encryption of one piece of target data.

Specifically, when a request for encryption is received from the terminal device 10, the learning data issuer 210 acquires, as the plurality of pieces of learning data, a plurality of sets of mutually different text data of a predetermined number of bytes or more from among the text data stored in the learning database 240.

When the plurality of pieces of learning data is acquired, the learning data issuer 210 communicates with the terminal device 10 via the communicator 25 and sends the plurality of pieces of learning data to the terminal device 10. Specifically, the learning data issuer 210 adds information, such as header information and the like needed for communication, to each of the plurality of pieces of learning data. Then, the learning data issuer 210 sends the plurality of pieces of learning data individually to the terminal device 10 that is the sender of the request for encryption from among the plurality of terminal devices 10 connected to the server device 20.

In the terminal device 10, the learning data acquirer 110 receives the plurality of pieces of learning data sent from the server device 20. Thus, the learning data acquirer 110 acquires the plurality of mutually different pieces of learning data from the server device 20 in the step of acquiring learning data.

In the step of generating the key, the key generator 120 performs learning based on each piece of the plurality of pieces of learning data acquired by the learning data acquirer 110. Then, the key generator 120 generates a plurality of mutually different encryption keys on the basis of the results of the learning based on each piece of the plurality of pieces of learning data.

Specifically, in accordance with the learning procedures described in Embodiment 1, the key generator 120 executes processing for generating one encryption key from one piece of learning data on each of the plurality of pieces of learning data acquired from the server device 20. As a result, the key generator 120 generates the same number of encryption keys as the number of pieces of learning data acquired from the server device 20. For example, as illustrated in FIG. 15, when three pieces of learning data are acquired from the server device 20, the key generator 120 generates three encryption keys.

In the step of encrypting, the encryptor 130 divides the target data to be encrypted into a plurality of pieces of divided data. At this time, the encryptor 130 divides the target data into the same number of pieces of divided data as the number of encryption keys generated by the key generator 120. For example, in FIG. 15, the encryptor 130 divides the target data into three pieces of divided data 1/3, 2/3, 3/3.

When the target data is divided, the encryptor 130 uses the plurality of encryption keys generated by the key generator 120 to respectively encrypt the plurality of pieces of divided data. Specifically, in accordance with the encryption procedures described in Embodiment 1, the encryptor 130 executes processing, for encrypting one piece of the divided data using one encryption key, on each of the plurality of pieces of divided data. When the plurality of pieces of divided data is encrypted, the encryptor 130 concatenates the encrypted plurality of pieces of divided data. As a result, one piece of encrypted data is generated from one corresponding piece of target data.

As in the encryption processing, in the decryption processing as well, the learning data issuer 210 re-issues the same plurality of pieces of learning data as in the encryption processing, and the learning data acquirer 110 re-acquires the plurality of pieces of learning data from the server device 20. The key generator 120 generates a plurality of encryption keys from the plurality of pieces of learning data, and the encryptor 130 divides the encrypted data into a plurality of pieces of divided data and decrypts the plurality of pieces of divided data using the plurality of encryption keys, respectively. Then, the encryptor 130 concatenates the decoded divided data to restore the target data.

Thus, in Embodiment 4, the learning data acquirer 110 acquires the plurality of pieces of learning data from the server device 20, and the key generator 120 performs learning based on each piece of the plurality of pieces of learning data and generates the plurality of encryption keys on the basis of the results of the learning. Moreover, the encryptor 130 divides the target data in to the plurality of pieces of divided data, and uses the plurality of encryption keys to respectively encrypt the plurality of pieces of divided data. When using one piece of learning data for one piece of target data, sufficient encryption strength is maintained due to the encryption key being generated by a one-time pad algorithm, but the encryption strength can be enhanced by dividing and encrypting the target data.

### Embodiment 5

Next, Embodiment 5 of the present disclosure is described. In Embodiment 5, as appropriate, descriptions of configurations and functions that are the same as described in Embodiments 1 to 4 are forgone.

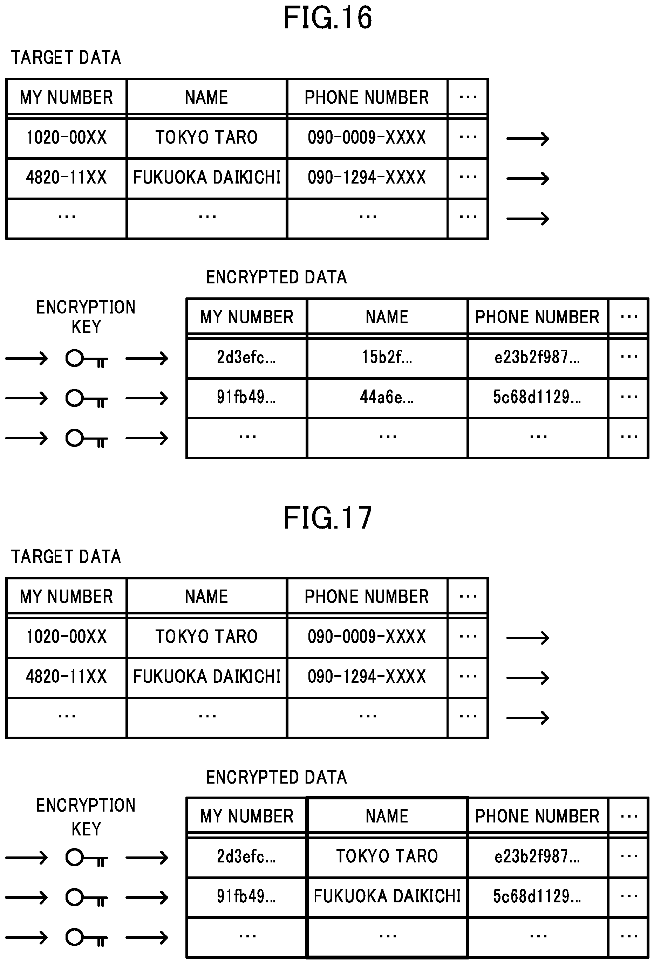

In Embodiment 5, the target data to be encrypted is data of a table having a plurality of rows and a plurality of columns. FIG. 16 illustrates an example of the table of Embodiment 5. The table illustrated in FIG. 16 has a plurality of rows corresponding to people, and a plurality of columns expressing data such as "MY NUMBER", "NAME", "PHONE NUMBER", and the like. In one example, the data of this table is stored in a database. Note that the rows of the table are referred to as records, and the columns of the table are referred to as columns.

In Embodiment 5, the encryptor 130 encrypts the data of each of the plurality of rows of the table using encryption keys generated by the key generator 120 and on the basis of different learning data for every row. In other words, the encryptor 130 encrypts the data of the table in units of rows (records), using a different encryption key for every row (record).

Specifically, in the server device 20, the learning data issuer 210 issues a plurality of pieces of mutually different learning data that corresponds to the number of rows of the table to be encrypted. In the terminal device 10, in the step of acquiring learning data, the learning data acquirer 110 acquires the plurality of pieces of learning data issued from the server device 20. In the step of generating the key, the key generator 120 performs learning based on each piece of the plurality of pieces of learning data acquired by the learning data acquirer 110. Then, the key generator 120 generates a plurality of mutually different encryption keys on the basis of the results of the learning based on each piece of the plurality of pieces of learning data. This processing for generating a plurality of mutually different encryption keys is the same as the processing described in Embodiment 4.

In the step of encrypting, the encryptor 130 uses the plurality of encryption keys generated by the key generator 120 to respectively encrypt the data of the plurality of rows of the table to be encrypted. Specifically, in accordance with the encryption procedures described in Embodiment 1, the encryptor 130 executes, on the data of each row of the table, processing for encrypting the data of one row of the table using an encryption key. As a result, as illustrated in FIG. 16, encrypted data, in which the data of each row of the table that is the target data is encrypted, is generated.

Additionally, every time data of a new row (record) is added to the table, the encryptor 130 encrypts the data of the added new row using an encryption key different from the encryption keys used to encrypt the existing data of the table. Specifically, every time data of a new row is added to the table, the learning data acquirer 110 requests new learning data from the server device 20.

In the server device 20, when a request for new learning data is received from the terminal device 10, the learning data issuer 210 issues new learning data. Specifically, the learning data issuer 210 issues, as the new learning data, learning data different from the learning data used to generate the encryption keys used to encrypt to existing data of the table.

In the terminal device 10, the learning data acquirer 110 acquires the learning data issued from the server device 20. The key generator 120 generates an encryption key from the acquired learning data, and the encryptor 130 uses the generated encryption key to encrypt the newly added data.

When performing the decryption processing, the user selects, as data to be decrypted, the data of at least one row from the plurality of rows of the table. The learning data issuer 210 re-issues the learning data used in the generation of the encryption key used to encrypt the selected data, and the learning data acquirer 110 re-acquires the learning data re-issued from the server device 20. The key generator 120 generates an encryption key from the re-acquired learning data, and the encryptor 130 uses the generated encryption key to decrypt the selected data.

Thus, in Embodiment 5, the target data to be encrypted is the data of the table having the plurality of rows and the plurality of columns, and the encryptor 130 encrypts the data of each of the plurality of rows of the table using encryption keys generated on the basis of different learning data for every row. The encryption system 1 according to the present disclosure can easily generate a plurality of different encryption keys by a one-time pad and, as such, can easily be applied to a system for encrypting, by row, the data of a table.

In particular, compared to when encrypting the data of all of the rows of a table using the same encryption key, encrypting using a different encryption key for every row eliminates the possibility of the data of other rows being decrypted in the case of the encryption key of one row being leaked. Additionally, a different encryption key is generated every time data of a new row is added to the table and the added data is encrypted. As such, the need to store the encryption keys in the terminal device 10 is eliminated. As a result, the data of the table can be encrypted with a high level of security.

### Embodiment 6

Next, Embodiment 6 of the present disclosure is described. In Embodiment 6, as appropriate, descriptions of configurations and functions that are the same as described in Embodiments 1 to 5 are forgone.

In Embodiment 5, the encryptor 130 encrypts the data of each of the plurality of rows of the table using encryption keys generated by the key generator 120 and on the basis of different learning data for every row. However, when all of the data of the table is encrypted, it is difficult for the user to reference the data of the table by a data search, for example. In order to enable referencing of the data of the table in Embodiment 5, reference data must be prepared separate from the encrypted data, for example. Herein, reference data is, for example, a portion of the data included in the table, the data being in an unencrypted state. Note that the reference data may be provided with a certain level of security by hashing or the like.

In contrast, in Embodiment 6, the encryptor 130 uses an encryption key generated on the basis of different learning data for every column to encrypt the data of columns other than at least one column to be used for referencing, and does not encrypt the data of the at least one column to be used for referencing. In other words, in Embodiment 6, the encryptor 130 does not encrypt the data of all of the plurality of columns of the table and, instead, encrypts only the data of a portion of the columns of the plurality of columns.

FIG. 17 is a drawing illustrating a situation in which the same table as in FIG. 16 is encrypted as target data in Embodiment 6. As illustrated in FIG. 17, the encryptor 130 uses an encryption key generated on the basis of learning data for every row to encrypt the data of the columns "MY NUMBER" and "PHONE NUMBER." However, the encryptor 130 does not encrypt the data of the column "NAME" (portion surrounded by thick lines in FIG. 17). In other words, the encryptor 130 leaves the data of the column "NAME" as-is in an unencrypted state as reference data.

As a result, the user can use the data of "NAME" to execute data referencing. For example, the user can confirm whose data is stored in which row of the plurality of rows (records).

Note that the unencrypted data of the column as the reference data is not limited to the "NAME" column, and can be set freely. For example, it is possible to encrypt the data of the columns that require a high security level, not encrypt the data of the columns that do not require a high security level, and use the latter as the reference data.

### Modified Examples

Embodiments of the present disclosure are described above, but these embodiments are merely examples and do not limit the scope of application of the present disclosure. That is, various applications of the embodiments of the present disclosure are possible, and all embodiments are included in the scope of the present disclosure.

For example, in the embodiments described above, text data is stored in the learning database 240 as data serving as the base of the encryption key, and the learning data acquirer 110 acquires, as the learning data, text data of the predetermined data size or greater from the learning database 240. However, a configuration is possible in which the learning database 240 stores digital data other than text data, and the learning data acquirer 110 acquires, as the learning data, the digital data other than text data. For example, a configuration is possible in which the learning database 240 stores data such as images, videos, music, speech, and the like, and learning data acquirer 110 acquires, as the learning data, the data such as images, videos, music, speech, and the like from the learning database 240. In such a case, the data collector 220 collects data such as images, videos, music, speech, and the like that exists on the internet, and stores the collected data in the learning database 240.

In the embodiments described above, the data collector 220 collects digital data published on the internet and stores the collected digital data in the learning database 240. However, the data stored in the learning database 240 is not limited to digital data published on the internet, and any type of digital data may be stored. For example, a configuration is possible in which the data stored in the learning database 240 is data such as speech, music, and the like recorded by a microphone, or data such as images, videos, and the like captured by a digital camera of a smartphone or the like. Furthermore, a configuration is possible in which the data stored in the learning database 240 is generated in the server device 20. Thus, any kind of digital data, including videos, images, and even meaningless data can be learned and, as such, the learning data issued by the learning data issuer 210 does not become depleted.

In the embodiments described above, the key generator 120 uses LSTM architecture to perform learning based on the learning data and generate block data that serves as the base of the encryption key. However, the key generator 120 is not limited to LSTM and may use any architecture to perform the learning. For example, a configuration is possible in which, when image data is acquired as the learning data by the learning data acquirer 110, the key generator 120 uses a convolutional neural network (CNN) architecture to perform the learning. Additionally, a configuration is possible in which the key generator 120 uses an architecture other than RNN, LSTM, or CNN to perform the learning.

The encryption procedures performed by the encryptor 130 are not limited to the procedures illustrated in FIG. 6, and any procedures may be used. Additionally, the data fingerprint generation procedures performed by the fingerprint generator 140 are not limited to the procedures illustrated in FIGS. 7A to 7C, and any procedures may be used.

The encryption method according to the present disclosure may be applied to advanced encryption standard (AES) technologies. For example, a configuration is possible in which the data encrypted by the encryption method described in the embodiments described above is further encrypted by AES, or data encrypted by AES is further encrypted by the encryption method described in the embodiments described above. As a result, the data can be protected in a case in which, for example, the data encrypted by AES is decrypted by a Biclique attack and, as such, the encryption strength can be enhanced compared to when encrypting by AES alone.

The encryption system according to present disclosure is not limited to being applied to AES and can be applied to a variety of encryption systems. In particular, in a system in which each piece of data must be encrypted using a different encryption key, the encryption method according to the present disclosure can easily generate a plurality of different encryption keys by a one-time pad. As such, the barrier to the adoption of highly reliable encryption systems can be lowered.

In the embodiments described above, in the controller 11 of the terminal device 10 or 10a, the CPU executes the program stored in the ROM or the storage 12, thereby functioning as the various components illustrated in FIG. 4 or 11. Additionally, in the controller 21 of the server device 20, 20a, the CPU executes the program stored in the ROM or the storage 22, thereby functioning as the various components illustrated in FIG. 4 or 11. However, a configuration is possible in which, the controller 11, 21 includes, for example, an Application Specific Integrated Circuit (ASIC), a Field-Programmable Gate Array (FPGA), various control circuitry, or other dedicated hardware instead of the CPU, and this dedicated hardware functions as the various components illustrated in FIG. 4 or 11. In this case, the functions of each of the components may be realized by individual pieces of hardware, or the functions of each of the components may be collectively realized by a single piece of hardware. Additionally, the functions of each of the components may be realized in part by dedicated hardware and in part by software or firmware. Alternately, a configuration is possible in which the controller 11, 21 includes, in addition to or in place of the CPU, an image processing processor such as a graphic processing unit (GPU) or the like. The GPU may function as the various components illustrated in FIG. 4 or 11.

A program defining the operations of the terminal device 10, 10a or the server device 20, 20a can be applied to an existing computer such as a personal computer, an information terminal device, or the like to cause that computer to function as the terminal device 10, 10a or the server device 20, 20a. Any distribution method of such a program can be used. For example, the program may be stored and distributed on a non-transitory computer-readable recording medium such as a compact disc read-only memory (CD-ROM), a digital versatile disc (DVD), a magneto optical (MO) disc, a memory card, or the like, or may be distributed via a communication network such as the internet or the like.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2020-140089, filed on August 21, 2020, the entire disclosure of which is incorporated by reference herein.

### Reference Signs List

- 1, 1a: Encryption system

- 10, 10a: Terminal device
- 11: Controller
- 12: Storage
- 13: Operation receiver
- 14: Display
- 15: Communicator
- 20, 20a: Server device
- 21: Controller
- 22: Storage
- 25: Communicator
- 110: Learning data acquirer
- 120: Key generator
- 130: Encryptor
- 140: Fingerprint generator
- 150: Fingerprint sender
- 160: Decryptor
- 180: Terminal-side authenticator
- 210: Learning data issuer
- 220: Data collector
- 230: Registrator
- 240: Learning database
- 250: Fingerprint database
- 280: Server-side authenticator
- 290: Authentication database

## Claims

1. An encryption method, comprising:
acquiring learning data from a server device when encryption of target data is requested;
performing learning based on the acquired learning data and generating, based on a result of the learning, an encryption key; and
encrypting the target data using the generated encryption key.

2. The encryption method according to claim 1, further comprising:
re-acquiring the learning data from the server device when decryption of encrypted data, which is the encrypted target data, is requested,
re-performing the learning based on the acquired learning data and re-generating, based on the result of the learning, the encryption key, and
decrypting the encrypted data to the target data using the generated encryption key.

3. The encryption method according to claim 2, further comprising:
generating unique information unique to the encrypted data by performing a specific computation on the encrypted data, and
sending the generated unique information to the server device, wherein
in the re-acquiring, when decryption of the encrypted data is requested, the learning data identified by the unique information is re-acquired from the server device.

4. The encryption method according to claim 3, wherein
in the generating of the unique information, portions of the encrypted data are concatenated, and the concatenated data is hashed to generate the unique information.

5. The encryption method according to any one of claims 1 to 4, wherein
in the generating of the encryption key, the learning based on the acquired learning data is performed to generate a learning model, and predetermined processing is performed on output data obtained as a result of the learning data being input into the generated learning model to generate the encryption key.

6. The encryption method according to any one of claims 1 to 5, wherein
in the encrypting, primary data is generated by calculating an exclusive OR between a portion of the target data and a portion of the encryption key, and the target data is encrypted by further calculating an exclusive OR between an entirety of the generated primary data and an entirety of the encryption key.

7. The encryption method according to any one of claims 1 to 6, wherein
in the acquiring of the learning data, a plurality of pieces of partial learning data sent individually from the server device is received, and the received plurality of pieces of partial learning data is concatenated to acquire the learning data.

8. The encryption method according to any one of claims 1 to 7, wherein
in the acquiring of the learning data, a plurality of pieces of mutually different learning data is acquired from the server device,
in the generating of the encryption key, learning based on each piece of learning data of the acquired plurality of pieces of learning data is performed, and a plurality of encryption keys is generated based on results of the learning, and
in the encrypting, the target data is divided into a plurality of pieces of divided data, and the plurality of pieces of divided data is encrypted using the generated plurality of encryption keys.

9. The encryption method according to any one of claims 1 to 8, wherein
the target data is data of a table having a plurality of rows and a plurality of columns, and
in the encrypting, data of each row of the plurality of rows of the table is encrypted using an encryption key generated based on different learning data for every row.

10. The encryption method according to claim 9, wherein
in the encrypting, every time data of a new row is added to the table, the data of the new row is encrypted using a different encryption key than encryption keys encrypting data of the existing rows included in the table.

11. The encryption method according to claim 9 or 10, wherein
in the encrypting, of the plurality of columns, data of columns other than at least one column to be used in referencing is encrypted using the encryption key generated based on the different learning data for every row, and the data of the at least one column to be used in the referencing is not encrypted.

12. A terminal device capable of communicating with a server device, the terminal device comprising:
a learning data acquirer that acquires learning data from the server device when encryption of target data is requested;
a key generator that performs learning based on the learning data acquired by the learning data acquirer and generates, based on a result of the learning, an encryption key; and
an encryptor that encrypts the target data using the encryption key generated by the key generator.

13. An encryption system, comprising:
the terminal device according to claim 12; and
the service device, wherein
the server device includes a learning data issuer that issues the learning data to the terminal device when a request for encryption is received from the terminal device.

14. The encryption system according to claim 13, wherein
the learning data issuer issues, as the learning data, different data every time the request for encryption is received.

15. The encryption system according to claim 13 or 14, wherein
the server device further includes a data collector that collects digital data published on an internet, and
the learning data issuer issues the learning data from among the digital data collected by the data collector.

16. The encryption system according to any one of claims 13 to 15, further comprising:
a server-side authenticator that, when a login is requested from the terminal device, issues a challenge key to the terminal device, and authenticates the login when a terminal-side answer key generated from the challenge key in the terminal device and a server-side answer key generated from the challenge key in the server device match.

17. The encryption system according to claim 16, wherein
in the terminal device, the terminal-side answer key is generated by decrypting the challenge key using an authentication key generated from the learning data, and
in the server device, the server-side answer key is generated by decrypting the challenge key using an authentication key generated from the learning data.

18. A program that causes a computer capable of communicating with a server device to function as:
a learning data acquirer that acquires learning data from the server device when encryption of target data is requested;
a key generator that performs learning based on the learning data acquired by the learning data and generates, based on a result of the learning, an encryption key; and
an encryptor that encrypts the target data using the encryption key generated by the key generator.
